# EUROPEAN PATENT APPLICATION

(11) **EP 1 727 018 A1**
(43) Date of publication of application: **29.11.2006**
(21) Application number: 05076260.8
(22) Date of filing: 26.05.2005
(51) Int. Cl.: G06F 1/16

(54) **Communication system for short-range wireless data exchange**

(71) Applicant: Nederlandse Organisatie voor Toegepast-Natuurwetenschappelijk Onderzoek TNO, 2628 VK Delft (NL)
(72) Inventor: Kalisvaart, Sytze Hendrik, 5627 KW Eindehoven (NL)
(74) Representative: Winckels, Johannes Hubertus F.

(57) **Abstract**

Communication system, comprising cooperating modules (1, 4, 5) which are enabled to mutually exchange data via at least one short-range wireless path. Each module comprises at least one wireless termination node (2) which is fit to be part of the relevant short-range wireless path. The housing (3) of each module comprises an external characteristic, e.g. shape (3a, 3b, 6a, 6b) and/or color, which is explicitly arranged to match with the shape of another module. The cooperating modules may comprise means which are arranged to perform a default (e.g. handshake) operation via the short-range wireless path as soon as the cooperating modules are brought into each others vicinity. The communication system may comprise different sets (A, B) of cooperating modules. Each module of one specific set comprises a housing with an external shape which is explicitly arranged to match with the shape of other modules of the same specific set. A set specific operation may be performed as soon as modules of the same specific set are brought into each others vicinity.

## Description

### Field

The invention concerns a communication system, comprising at least two cooperating modules which are enabled to mutually exchange data via at least one short-range wireless path, each one of said cooperating modules comprising at least one wireless termination node which is fit to be part of the relevant short-range wireless path.

### Background

Many people nowadays are surrounded by electronic products such as PC' s and wear various mobile communication devices such as mobile phones, headsets, fitness devices (e.g. heart rate sensors and wristwatch computers) and PDA's. There is a tendency in using more and more collaborating devices, distributed over the user's body and direct environment. These products may have to communicate with each other, e.g. in a wireless manner. In general it is not always easy to establish a reliable wireless connection between the devices for an average consumer. In general, products nowadays have so many additional functions and features that there is a growing need for simpler interaction mechanisms, designed for all users (e.g. elderly, no-nonsense consumers, incidental users, children and disabled persons) with basic functionality and easy, intuitive control.

### Summary

One aim of the present invention is to meet the objections of the known systems and to present a communication system comprising cooperating modules (e.g. mobile phones, headsets, PCs, PDAs, wrist computers, sensor devices for e.g. sport or healthcare, MP3 players, access badges and readers, laptops, keyboards, display devices, etc.) which comprise arrangements for simple, easy and intuitive operation. Preferably, each one of the cooperating modules of the new system comprises a housing which comprises an external shape or other external characteristic, e.g. specific colors, which are explicitly arranged -obvious for their users- to match (physically) with the shape or other external characteristic of a cooperating module. Aim of the matching external characteristics is to facilitate and/or enhance said data exchange via the short-range wireless path or paths respectively in a user friendly and intuitive way.

Preferably, the external characteristic of the housing and the location of the wireless node or nodes are arranged thus that, when bringing said cooperating modules into each others (physical) vicinity, the wireless node or nodes of said cooperating modules match too, thus enhancing the data exchange via the short-range wireless path(s). The cooperating modules may e.g. comprise bidirectional and/or unidirectional nodes. The cooperating modules may e.g. comprise infrared (IR), radio frequent (RF) and/or inductive nodes, e.g. comprising electromagnetic loops or coils.

Moreover, the cooperating modules may comprise means (implemented in hardware and/or software) which are arranged to perform at least one default operation (or a default set of operations) via the relevant short-range wireless path or paths as soon as said cooperating modules are brought into each others vicinity. For instance, an automatic handshake operation may be performed, e.g. including the exchange of a default set of data, e.g. address data like telephone numbers or business card data.

The communication system may comprise different sets of (two or more) cooperating modules, each one of the cooperating modules of one specific set comprising a housing which comprises an external characteristic which is explicitly arranged ―and intuitively obvious for the users- to match with the characteristic of another one of the cooperating modules of the same specific set. In this way different module clusters may be formed of mutual compatible modules, together establishing a dedicated subsystem. It may be preferred that each one of the cooperating modules of one specific set (or subsystem) comprises (hardware and/or software) means which are arranged to perform a default operation or default operations set as soon as said cooperating modules of the same specific set are brought into each others vicinity. The relevant default operation or default operations set preferably is representative for the relevant specific set of cooperating modules or, in other words, the relevant subsystem.

### Exemplary Embodiment

Figure 1 shows a couple of cooperating communication modules.
Figure 2 shows a communication system, comprising two subsystems, each formed by two modules having equal shapes.
Figure 3 shows a communication system, comprising two subsystems, formed by two sets of modules having mutual different shapes.
Figure 4 shows another set of two cooperating modules.

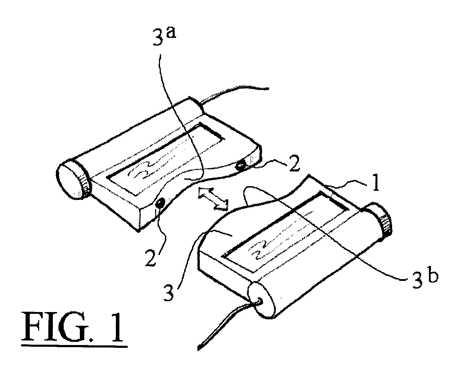

In figure 1 a communication system is shown which comprises two identical communication modules or terminals 1, which are enabled to mutually exchange data via a short-range wireless path which comprises e.g. one or (like in figure 1) two termination nodes 2. Each module 1 comprises a housing 3 which comprises an external shape which is - at least for a part 3a- explicitly arranged so as to match with the shape of the cooperating module. The external shape 3a of the housing 3 and the location of the wireless nodes 2 are arranged thus that, when bringing the cooperating modules into each others direct vicinity, the nodes 2 of both cooperating modules 3 match too, viz. come into a position wherein they face each other. The nodes 2 may be unidirectional or bidirectional nodes, e.g. operating in the infrared domain, radio frequent domain or the (e.g. rather low frequent) magnetic/inductive domain.

The modules 3 may comprise means (hardware/software), arranged to perform a default operation via the relevant short-range wireless path or paths as soon as the cooperating modules are brought into each others vicinity. The default operation may start automatically when the relevant module 3 detects the reception of a signal having a certain minimum signal strength or a code having a certain value, from the other side. The default operation may comprise an automatic handshake operation, which may be followed by further data transmission.

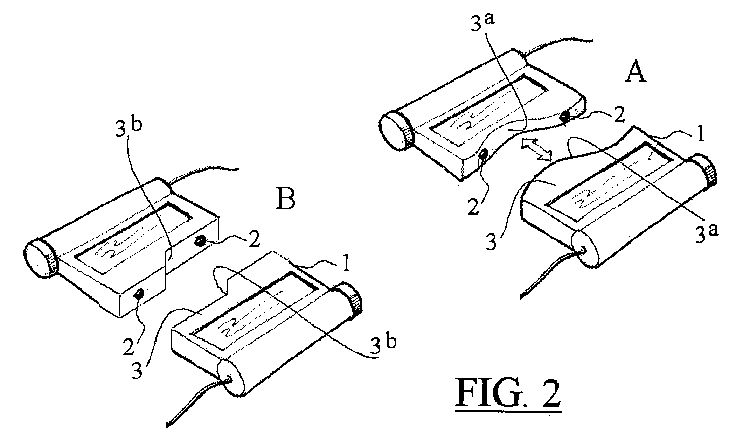

Figure 2 shows schematically two different sets A and B of cooperating modules (two of each set shown). Each of the modules of one specific set comprises a housing which comprises an external shape which is explicitly arranged to match with the shape of another one of the cooperating modules of the same specific set. In figure 2 the housings of all modules of the first set A has a shape (at the side of the nodes) 3a and the housings of all modules of the second set B has a shape (at the side of the nodes) 3b, which intuitively leads users to couple modules of the first set or modules of the second set with each other.

Each one of the cooperating modules of one specific set A or B respectively comprises means which are arranged to perform a default operations as soon as said cooperating modules of the same specific set are brought into each others direct vicinity. The default operation may be (or may be not) representative for the relevant specific set A or B respectively of cooperating modules.

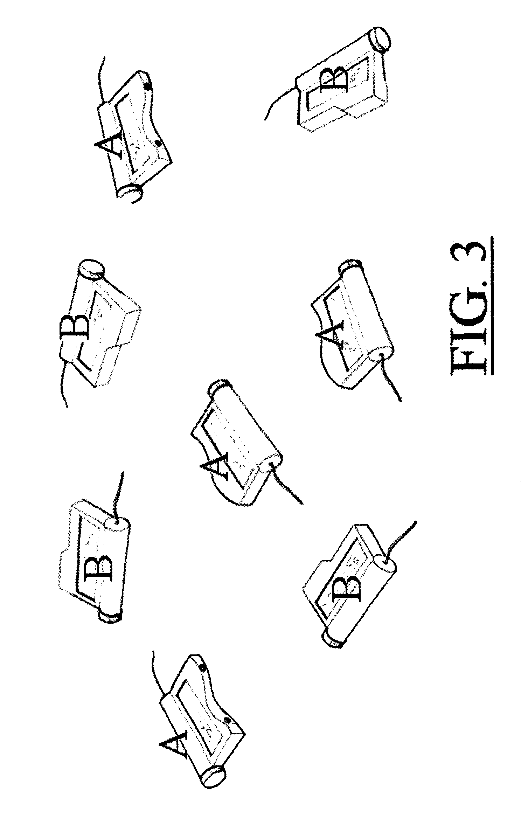

Figure 3 shows a communication system, comprising two subsystems, formed by two sets of modules having mutual different shapes. The modules belonging to the respective subsystems are indicated by A and B.

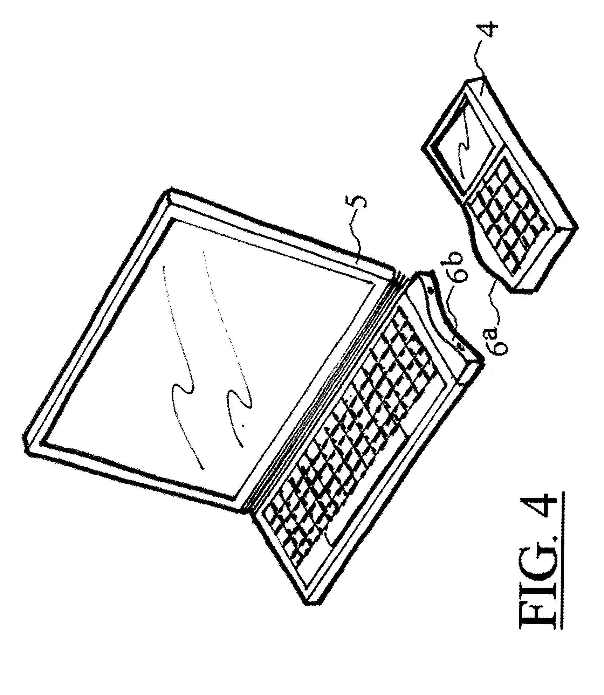

Finally, figure 4 shows a set of two modules, viz. an organizer like module 4 and a laptop like device 5 which can mutually cooperate by means of a short-range wireless path, via nodes in matching shapes 6a-6b. The complete system may comprise several organizer like devices 4 and/or laptop like devices 5 which can communicate with each other by means of the nodes in the specially shaped housing parts 6a and 6b of those cooperation devices.

## Claims

1. Communication system, comprising at least two cooperating modules which are enabled to mutually exchange data via at least one short-range wireless path, each one of said cooperating modules (1, 4, 5) comprising at least one wireless termination node (2) which is fit to be part of the relevant short-range wireless path, moreover, each one of said cooperating modules comprising a housing (3) which comprises an external characteristic which is explicitly arranged to match with the characteristic of another one of said cooperating modules.

2. Communication system according to claim 1, said external characteristic is the relevant modules external shape (3a, 3b, 6a, 6b).

3. Communication system according claim 1, the external characteristic of the housing and the location of the wireless node or nodes being arranged thus that, when bringing said cooperating modules into each others vicinity the wireless node or nodes of said cooperating modules match too.

4. Communication system according to claim 1 or 3, each of said cooperating modules comprising at least one bidirectional node.

5. Communication system according to claim 1 or 3, each of said cooperating modules comprising at least two unidirectional nodes.

6. Communication system according to claim 1 or 3, each of said cooperating modules comprising one or more infrared nodes.

7. Communication system according to claim 1 or 3, each of said cooperating modules comprising one or more radio frequent nodes.

8. Communication system according to claim 1 or 3, each of said cooperating modules comprising one or more inductive nodes.

9. Communication system according claim 1 or 3, each of said cooperating modules comprising means which are arranged to perform at least one default operation via the relevant short-range wireless path or paths as soon as said cooperating modules are brought into each others vicinity.

10. Communication system according to claim 9, one default operation being an automatic handshake operation.

11. Communication system according to claim 1, comprising different sets (A, B) each of at least two cooperating modules, each one of the cooperating modules of one specific set comprising a housing which comprises an external characteristic which is explicitly arranged to match with the characteristic of another one of the cooperating modules of the same specific set.

12. Communication system according to claim 9 and 11, each one of the cooperating modules of one specific set comprising means which are arranged to perform at least one default operation as soon as said cooperating modules of the same specific set are brought into each others vicinity.

13. Communication system according to claim 11, said at least one default operation is representative for the relevant specific set of cooperating modules.
